# EUROPEAN PATENT APPLICATION

(11) **EP 2 302 774 A2**
(43) Date of publication of application: **30.03.2011**
(21) Application number: 10251412.2
(22) Date of filing: 06.08.2010
(51) Int. Cl.: H02M 1/32

(54) **Inverter malfunction stop system**

(30) Priority: 29.09.2009 JP 2009224868
(71) Applicant: Hitachi, Ltd., Chiyoda-ku Tokyo 100-8280 (JP)
(72) Inventor: Maekawa, Keiji, Tokyo 100-8220 (JP); Ogawa, Takashi, Tokyo 100-8220 (JP); Nagatsugu, Yoshihide, Tokyo 100-8220 (JP)
(74) Representative: Paget, Hugh Charles Edward

(57) **Abstract**

In a past railway accident, a malfunctioning logic unit of an inverter could not receive acceleration commands, according to which the logic unit maintained the previously received acceleration command and the inverter maintained acceleration while the train is attempting to decelerate, which lead to an accident since it was impossible to obtain the desired deceleration. In order to overcome this problem, the reliability of the inverter logic unit must be improved. The present invention provides an inverter monitoring apparatus independently from an inverter, and when malfunction of the inverter is detected, a high-speed circuit breaker or the like is activated to disconnect a main circuit and the operation of the inverter is stopped forcibly, or a logic unit of the inverter is reset, for example, so as to prevent dangers caused by the malfunction of the inverter.

## Description

### BACKGROUND OF THE INVENTION

### Field of the invention

The present invention relates to an onboard control system of a railway vehicle having an inverter (DC/AC converter), and specifically, relates to an onboard control system of a railway vehicle capable of detecting malfunction of the inverter and stopping the operation of the inverter when malfunction occurs.

### Description of the related art

In general, it has been considered that when malfunction of the inverter occurs, the inverter enters a malfunction mode in which the inverter cannot rotate the motor correctly, so that the malfunction of the inverter does not cause hazardous events such as derailing and collision. Since the motor only rotates when correct control is performed, the motor will not rotate when the inverter malfunctions to cause abnormal output.

On the other hand, various safety measures are taken for the malfunction of a main circuit of the inverter. For example, when short-circuit failure of the main circuit occurs, in the worst case, short circuit may occur between the overhead wire and the rails, by which a large current flow is created, causing a dangerous condition. Therefore, generally when malfunction is detected, measures are taken to disconnect the main circuit, such as through use of a high-speed circuit breaker or other devices capable of de-energizing current.

For example, Japanese patent application laid-open publication No. 2009-50059 (patent document 1) discloses a failure detector for detecting any failure in an alternating-current rotary machine, a power converter, and connecting means (three-phase output line) connecting together the power converter and the alternating-current rotary machine. [Patent document 1] Japanese patent application laid-open publication No. 2009-50059

As described above, measures have been taken against the failure of the main circuit of the inverter, and it was considered that the failure of the inverter merely caused the train to stop, and does not cause hazardous events such as derailing and collision. In the past, however, a railway accident was caused by the malfunction of the inverter, in which the inverter ignored the deceleration command and continued to accelerate.

It was analyzed that the accident was caused by the malfunction of the logic unit of the inverter, during which the logic unit was unable to receive the deceleration command and maintained the acceleration command received earlier, so that the train attempted to decelerate but the inverter continued to accelerate, according to which the desired deceleration could not be obtained and an accident occurred.

The reliability of the inverter logic unit must be enhanced to prevent such accidents, but in order to do so, there is a drawback that the hardware configuration of the apparatus must be reviewed and additional steps must be provided to create the software, according to which the costs related to creating the inverter are increased.

### SUMMARY OF THE INVENTION

The present invention aims at solving the problems of the prior art by providing a means for monitoring the operation of the inverter independently from the inverter, and when the means detects malfunction of the detector, the operation of the inverter is stopped.

Actually, an inverter monitoring apparatus is disposed in a train, and the apparatus monitors whether the inverter is performing normal acceleration and deceleration control or not. When the inverter monitoring apparatus detects malfunction of the inverter, for example, the operation of the inverter is stopped forcibly by activating a high-speed circuit breaker or the like to disconnect the main circuit, or the logic unit of the inverter is reset, in order to prevent dangers caused by the malfunction of the inverter.

The inverter monitoring apparatus is a simple apparatus only having a function to monitor the inverter and stop the inverter when malfunction occurs, so that both the hardware and the software of the apparatus can be created easily, and has little influence on the increase of costs. Furthermore, the inverter monitoring apparatus can be assembled to apparatuses such as a signal controlling apparatus already disposed on a train, and in that case, there is even no need to provide an additional apparatus.

According to the present invention, the occurrence of hazardous events caused by the malfunction of the inverter can be prevented, while maintaining an equivalent reliability of the converter as in the prior art. Further, the increase of costs related to taking measures against inverter malfunction can be suppressed to a small amount.

### BRIEF DESCRIPTION OF THE DRAWINGS

FIG. 1 is a block diagram illustrating the structure of an inverter malfunction stop system according to embodiment 1 of the present invention;
FIG. 2 is a block diagram illustrating an example of the structure of an inverter monitoring apparatus 101 capable of monitoring the inverter status according to embodiment 1 of the present invention;
FIG. 3 is a block diagram illustrating an example of the structure of the invertermonitoring apparatus 101, which detects malfunction of the inverter 102 by monitoring deceleration according to embodiment 1 of the present invention;
FIG. 4 is a block diagram illustrating an example of the structure of the inverter monitoring apparatus 101, which monitors the state of the inverter according to embodiment 2 of the present invention; and
FIG. 5 is a block diagram illustrating an example of the structure of the inverter monitoring apparatus 101, which monitors the malfunction of the inverter 102 by monitoring acceleration according to embodiment 2 of the present invention.

### DETAILED DESCRIPTION OF THE PREFERRED EMBODIMENTS

The present invention realizes via a simple system configuration the object of ensuring safety when malfunction of the inverter occurs, while maintaining the conventional reliability of the inverter. Now, we will illustrate the preferred embodiments of the present invention with reference to the drawings.

### [Embodiment 1]

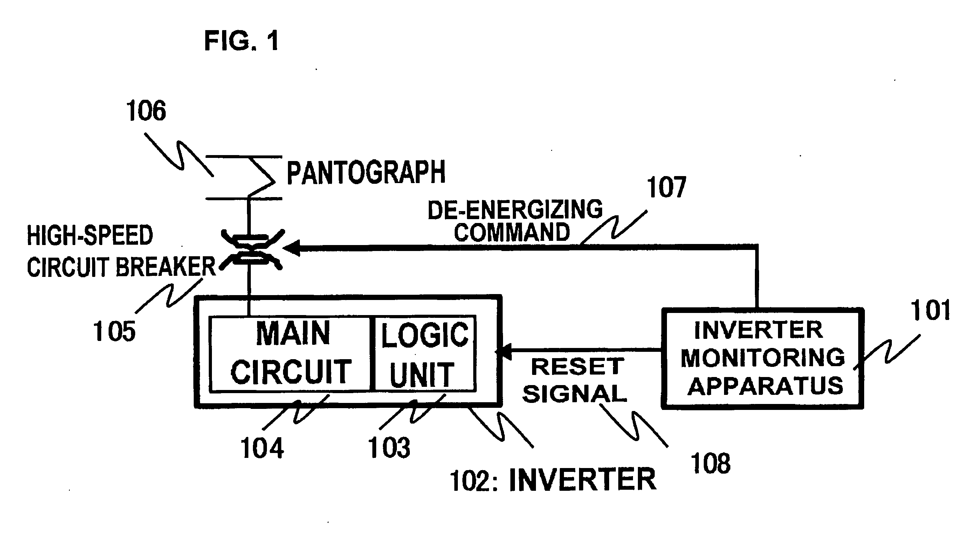

FIG. 1 illustrates a system configuration of an inverter malfunction stop system according to embodiment 1 of the present invention. In the present invention, a combination of an inverter logic unit 103 andamaincircuit 104 is called an inverter 102.

An inverter monitoring apparatus 101 monitors whether the inverter 102 is operating correctly or not. The method for determining whether the inverter is operating correctly or not will be described in detail later. The inverter monitoring apparatus 101 stops the operation of the inverter 102 forcibly when it detects malfunction of the inverter 102.

Means for stopping the inverter 102 can adopt a method of outputting an de-energizing command 107 for de-energizing the current supplied from a pantograph 106 to the main circuit 104, or a method of outputting a reset signal 108 to the inverter logic unit 103 to reset the inverter logic unit 103 or outputting a continuous reset signal 108 to stop the operation of the inverter logic unit.

Regarding the method for de-energizing the current to the main circuit 104, a conventional mechanism for de-energizing the current for protecting the main circuit is already disposed, so the mechanism can be used as it is. For example, a high-speed circuit breaker 105 has a terminal capable of corresponding to an de-energizing command from the exterior, so the de-energizing command 107 should be entered through that terminal. Alternatively, the current can be de-energized through use of a line breaker.

The inverter logic unit 103 can be reset by additionally providing an interface for entering a reset signal 108 to the inverter logic unit 103. Conventionally, the inverter logic unit 103 is equipped with a function to reset itself or stop itself when malfunction is detected via a watchdog timer, for example, and processes to be performed in response to the reset signal 108 can be realized easily by simply additionally providing a reset signal 108 from the exterior as one condition of such functions.

Further, it is possible to stop the operation of the inverter logic unit 103 by switching off the power of the inverter logic unit 103. Moreover, the inverter logic unit 103 can enter a stopped state by maintaining the reset signal 108 in a reset state. The processes to be performed with respect to the inverter logic unit 103 should be determined suitably to correspond to the inverter logic unit.

Now, the method for determining whether the inverter 102 is operating correctly or nor via the inverter monitoring apparatus 101 can adopt a method for monitoring the operating status of the inverter 102 via the inverter monitoring apparatus 101 or a method for monitoring the deceleration of the train.

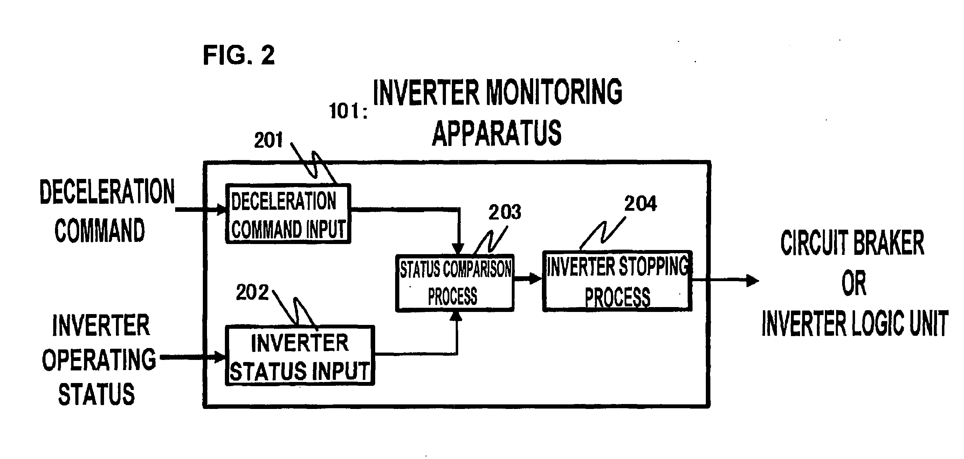

Upon monitoring the operating status of the inverter 102, the operation modes of the inverter 102 such as acceleration, deceleration and coasting, or the current status of the rotor driven by the inverter 102 are considered to show the operating status of the inverter 102, which are entered to the inverter monitoring apparatus 101 through the transmission via an onboard network or via a contact point information, wherein the inverter monitoring apparatus 101 verifies the command information regarding acceleration and deceleration with the operating status of the inverter 102 or the rotor current status, and when they are inconsistent, determines that the inverter 102 is malfunctioning. The configuration of the inverter monitoring apparatus 101 of this example is shown in FIG. 2.

In FIG. 2, a deceleration command input 201 receives a deceleration command from the exterior. An operation status of the inverter 102 is entered to an inverter status input 202. The deceleration command received by the deceleration command input 201 and the operating status of the inverter 102 received by the inverter status input 202 are compared via a status comparison process 203, and when they are inconsistet, the result is output to an inverter stopping process 204, according to which the inverter stopping process 204 stops the inverter 102 by de-energizing the main circuit or resetting the inverter logic unit 103.

Upon monitoring the deceleration of the train as railway vehicle, a train speed and a deceleration command information are entered to the inverter monitoring apparatus 101, and a deceleration performance of the train is stored in advance, wherein the deceleration of the train is computed when a deceleration command is received, which is compared with the deceleration performance of the train, and if the deceleration is insufficient, it is determined that the inverter 102 is malfunctioning.

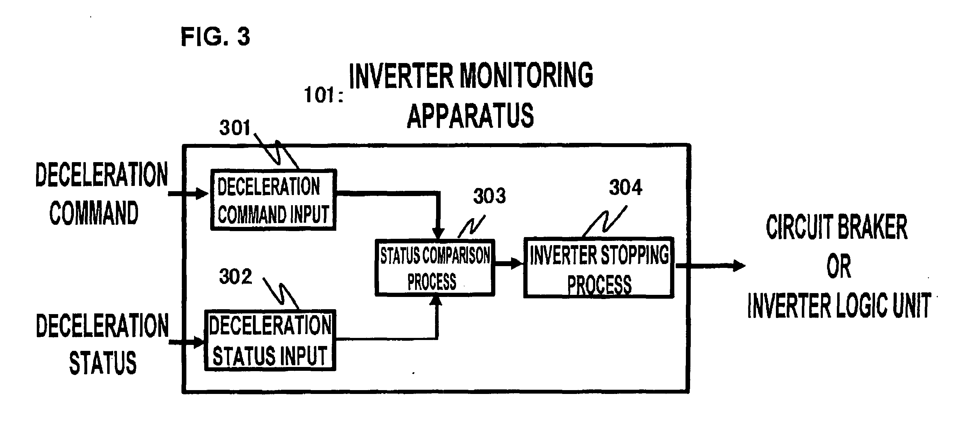

Insufficient deceleration may be caused by factors other than the malfunction of the inverter, but if the deceleration using an electric brake via the inverter 102 is insufficient, deceleration is realized by activating the air brake, so that issues related to safety will not arise even if the electric brake via the inverter 102 is stopped. The configuration of the inverter monitoring apparatus 101 at this time is shown in FIG. 3.

FIG. 3 merely replaces the inverter status of FIG. 2 with a deceleration status. The status comparison process 303 compares the desired deceleration set in advance and the deceleration status, and if deceleration is insufficient, determines that the inverter 102 is malfunctioning.

Processes other than the above-described process is similar to FIG. 2. A train can have a single inverter monitoring apparatus 101, or have inverter monitoring apparatuses 101 disposed on every car. The apparatus should be disposed appropriately in consideration of the number and arrangement of the inverters 102 or the installation position of the high-speed circuit breaker 105. For example, if it is possible to de-energize the main circuit via unit inverter 102, a number of inverter monitoring apparatuses 101 corresponding to the number of inverters 102 can be disposed.

On the other hand, if the arrangement is capable of de-energizing the main circuits of a plurality of inverters 102, a number of inverter monitoring apparatuses 101 corresponding to the unit of de-energizing of inverters can be disposed. If it is possible to reset the inverter logic unit 103 via the inverter monitoring apparatus 101, a number of inverter monitoring apparatuses 101 corresponding to the inverter logic units 103 can be disposed.

The inverter monitoring apparatus 101 can be implemented as a function of an onboard signal control apparatus or a brake control apparatus, instead of installing the inverter monitoring apparatus 101 as an independent apparatus. Also according to such application, the functional blocks are the same as those illustrated in FIGS. 2 and 3.

Since the onboard signal apparatus is an important apparatus for ensuring the safety of the train during operation, it is conventionally designed to ensure a high level of safety, and so the apparatus can also realize the inverter monitoring function with high stability.

Moreover, since the onboard signal apparatus comprehends the deceleration status by monitoring the speed of the train, the arrangement of FIG. 3 for monitoring the deceleration of the train enables to monitor whether the inverter 102 is performing the deceleration operation correctly or not, by entering the deceleration command output from the onboard signal apparatus as input to a deceleration command input 301 and entering the deceleration status as input to a deceleration status input 302, without additionally providing a special signal.

Further, even according to the arrangement of FIG. 2 for monitoring the operation status of the inverter 102, it is easy to enter the deceleration command of the onboard signal apparatus as input to the deceleration command input 201, and to connect the inverter 102 to a transmission line so as to monitor information.

Conventionally, the brake control apparatus has a function so-called an electropneumatic blending for adjusting the output of an electric brake and an air brake in response to the deceleration command. According to the arrangement of FIG. 2, it is possible to easily monitor whether the inverter 102 is performing deceleration operation correctly or not by entering the deceleration command as input to the deceleration command 201 and entering the output status of the electric brake as input to the inverter status input. Furthermore, the arrangement of FIG. 3 can also be adopted if the brake control apparatus is designed to recognize the train speed.

By arranging the inverter malfunction stop system as described above, even when malfunction of the inverter 102 causes the train to ignore the deceleration command and continue acceleration, the present system enables to stop the operation of the inverter 102 and prevent insufficient deceleration, according to which the safety of the train operation can be enhanced.

### [Embodiment 2]

According to embodiment 1, the inverter 102 is stopped when the inverter 102 is not decelerated in response to the deceleration command and the deceleration of the train is insufficient, but the same apparatus configuration canbe applied to detect malfunction of the inverter 102 in which the inverter is not accelerated in response to the acceleration command.

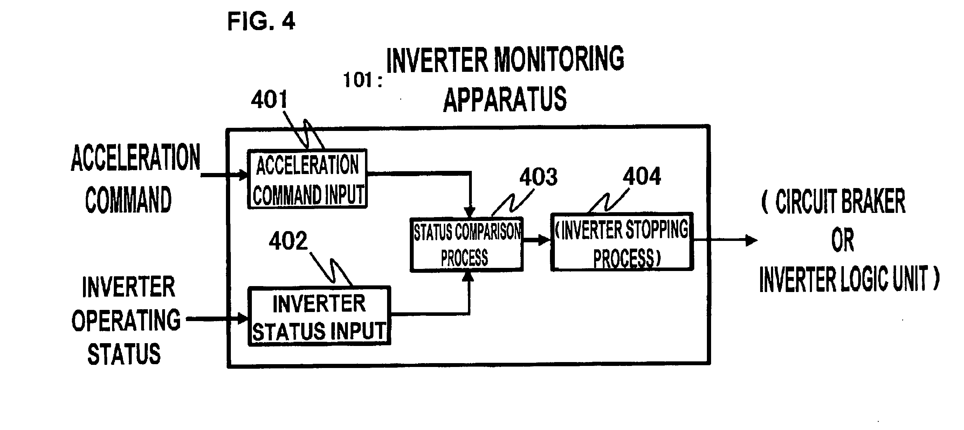

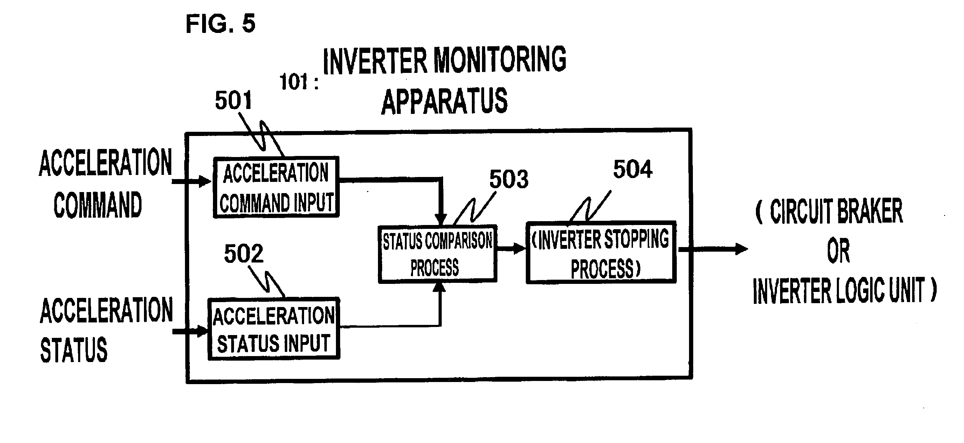

The concept of the present embodiment is the same as embodiment 1, but in FIGS. 4 and 5, the deceleration commands in FIGS. 2 and 3 are replaced with acceleration commands. In other words, an acceleration command is entered to the inverter monitoring apparatus 101. When the arrangement of FIG. 4 is adopted, the apparatus determines that the inverter 102 is malfunctioning when the operation status of the inverter 102 is inconsistent with the acceleration command.

When the arrangement of FIG. 5 is adopted, the acceleration of the train as railway vehicle is monitored so as to monitor whether the acceleration of the train corresponds to the acceleration command, and the apparatus determines that the inverter 102 is malfunctioning when the acceleration is insufficient.

The process to be performed after detecting malfunction of the inverter 102 varies according to application and status. Since the malfunction is related to insufficient acceleration, it is possible to continue operation of the train and use the information as a mere maintenance information since there is no problem related to safety, or it is possible to determine the malfunctioning inverter 102 as a threat and isolate the same. It is sometimes necessary to detach the malfunctioning inverter causing the train to continue deceleration in spite of the acceleration command, since such operation may have a bad influence on the wheels, for example.

The process to be performed with respect to the malfunctioning and non-accelerating inverter 102 is a matter within the application range, and exceeds the range of the present invention. In other words, the operations of the inverter stopping process 404 and the inverter stopping process 504 according to FIGS. 4 and 5 are not specified in the present embodiment.

The inverter malfunction stop system having the above-described arrangement is capable of detecting the non-acceleration inverter 102 due to malfunction, and performing processes in response thereto.

## Claims

1. An inverter malfunction stop system of a railway vehicle having an inverter composed of a main circuit and an inverter logic unit, the inverter activating an electric brake during deceleration, **characterized in that**
the system comprises an inverter monitoring apparatus for monitoring operation of the inverter, wherein the inverter is stopped when malfunction is detected.

2. The inverter malfunction stop system according to claim 1, **characterized in that** a means for stopping the inverter disconnects the main circuit from a power supply source.

3. The inverter malfunction stop system according to claim 1, **characterized in that** the means for stopping the inverter resets the inverter logic unit.

4. The inverter malfunction stop system according to claim 1, **characterized in that** the means for stopping the inverter turns off a power supply supplying power to the inverter logic unit.

5. The inverter malfunction stop system according to claim 1, **characterized in that** an inverter operation status and a deceleration command are entered to the inverter monitoring apparatus, and when the deceleration command is entered but the inverter operating status is not in a deceleration status, the system determines that the inverter is malfunctioning.

6. The inverter malfunction stop system according to claim 1, wherein a deceleration status and a deceleration command of the railway vehicle are entered to the inverter monitoring apparatus, and when the deceleration command is entered but the deceleration is insufficient compared to a desired deceleration set in advance, the system determines that the inverter is malfunctioning.

7. The inverter malfunction stop system according to claim 1, wherein the function of the inverter monitoring apparatus is disposed in an onboard signal control apparatus.

8. The inverter malfunction stop system according to claim 1, wherein the function of the inverter is disposed in a brake control apparatus.

9. The inverter malfunction stop system according to claim 1, wherein an inverter operating status and an acceleration command are entered to the inverter monitoring apparatus, and when the acceleration command is entered but the inverter operating status is not in an accelerated status, the system determines that the inverter is malfunctioning.

10. The inverter malfunction stop system according to claim 1, wherein an acceleration status and an acceleration command of the railway vehicle are entered to the inverter monitoring apparatus, and when the acceleration command is entered but the acceleration is insufficient compared to a desired acceleration set in advance, the system determines that the inverter is malfunctioning.
